# FASCICULE DE BREVET EUROPEEN

(11) **EP 3 459 084 B1**
(45) Date de publication et mention de la délivrance du brevet: **10.06.2020**
(21) Numéro de dépôt: 17742489.2
(22) Date de dépôt: 21.06.2017
(51) Int. Cl.: G21C 19/46, G21C 19/36

(54) **PROCÉDÉ DE DISSOLUTION D'UN COMBUSTIBLE NUCLÉAIRE**
VERFAHREN ZUM AUFLÖSEN VON KERNBRENNSTOFF
PROCESS FOR DISSOLVING NUCLEAR FUEL

(30) Priorité: 23.06.2016 FR 1655871
(43) Date de publication de la demande: 27.03.2019
(73) Titulaire: Orano Cycle, 92320 Châtillon (FR); Commissariat à l'Energie Atomique et aux Energies Alternatives, 75015 Paris (FR)
(72) Inventeur: LETURCQ, Gilles, 84850 Camaret Sur Aigues (FR); DELAHAYE, Thibaud, 30330 Tresques (FR)
(74) Mandataire: Brevalex
(86) Numéro de dépôt international: PCT/FR2017/051646
(87) Numéro de publication internationale: WO 2017/220928

(56) Documents cités:
- WO-A2-01/33575
- DE-A1- 1 542 175
- US-A- 3 813 464

## Description

### DOMAINE TECHNIQUE

La présente invention se rapporte à un procédé de dissolution d'un combustible nucléaire, ce procédé présentant des performances améliorées par rapport aux procédés de dissolution actuels, en particulier lorsque le combustible nucléaire, qu'il ait été irradié en réacteur nucléaire ou soit un rebut de fabrication, comprend du plutonium, ou un mélange d'uranium et de plutonium.

La présente invention se rapporte également à l'utilisation d'un dispositif particulier pour la mise en œuvre de ce procédé de dissolution.

L'invention se rapporte enfin à un procédé de dissolution d'un combustible nucléaire irradié, mettant en œuvre le procédé de dissolution précédent pour l'obtention d'une dissolution améliorée de composés valorisables contenus dans des fines de dissolution issues des procédés de dissolution actuels.

### ÉTAT DE LA TECHNIQUE ANTÉRIEURE

Le document US 3 813 464 enseigne un procédé de dissolution d'un combustible nucléaire avec broyage du combustible avant la dissolution du combustible dans l'acide nitrique.

Dans le souci constant d'optimisation de la gestion des déchets radioactifs, le combustible déchargé des réacteurs nucléaires, dit "combustible irradié" ou "combustible usé", est traité dans le but de séparer les matières recyclables, telles que l'uranium et le plutonium, des déchets ultimes considérés comme non recyclables à ce jour que sont les produits de fission tels que les platinoïdes et les actinides mineurs tels que le neptunium, l'américium et le curium.

Le traitement comporte un ensemble de procédés physiques et chimiques : les assemblages de combustible nucléaire irradié, constitués de gaines étanches à l'intérieur desquelles est confinée la matière formant le combustible nucléaire, sont tronçonnés, typiquement sous forme de tronçons de l'ordre de 3 cm à 5 cm de longueur. Ces tronçons sont ensuite immergés dans une solution d'acide nitrique concentrée de manière à dissoudre la matière nucléaire confinée dans les gaines, ces dernières étant pratiquement insolubles.

La solution nitrique de dissolution obtenue à l'issue de cette immersion contient, dans la phase liquide, l'uranium, le plutonium, les actinides mineurs, les produits de fission solubles ainsi que des produits solides insolubles, parmi lesquels les produits de fission insolubles couramment appelés "fines de dissolution". Ces fines de dissolution correspondent à des solides de faible granulométrie, typiquement inférieure à 1 µm, résultant de la non-dissolution, par les procédés de dissolution actuels, de certains produits de fission tels que les platinoïdes et/ou de la dissolution partielle de certains autres tels que le molybdène, le zirconium ou encore le technétium.

Cette solution nitrique de dissolution est ensuite soumise à une succession d'étapes chimiques de manière à séparer les matières valorisables et/ou recyclables et à produire des solutions de plutonium et d'uranium, à partir desquelles on recycle l'uranium et le plutonium pour la fabrication de nouveaux combustibles.

Le procédé de dissolution du combustible nucléaire dans la solution d'acide nitrique constitue une étape clé du traitement puisqu'il doit permettre de faire passer en solution, le plus complètement possible, les éléments chimiques contenus dans ce combustible nucléaire.

À ce jour, ce procédé de dissolution du combustible nucléaire est un procédé pouvant fonctionner en continu ou discontinu.

Lorsqu'il fonctionne en continu, le procédé de dissolution est mis en œuvre au moyen d'un dissolveur rotatif comprenant une roue à godets tournant dans une cuve contenant la solution d'acide nitrique chauffée entre 90 °C et 105 °C. Le chargement des godets se fait roue arrêtée, par alimentation directe des assemblages tronçonnés dans un godet. La roue tourne ensuite pour l'alimentation du godet suivant. La vitesse de rotation de la roue est choisie de manière à garantir une durée de séjour des assemblages tronçonnés immergés supérieure à deux heures, dans le but d'optimiser la dissolution, dans la solution d'acide nitrique, du combustible irradié.

Ce procédé de dissolution actuel présente des performances qui varient en fonction de la matière formant le combustible nucléaire que l'on cherche à dissoudre.

En effet, si le procédé actuel réalisé au moyen d'un tel dissolveur rotatif est tout à fait satisfaisant pour la dissolution de combustibles nucléaires à base d'uranium, en particulier à base d'oxydes d'uranium, dits "combustibles UOX", on observe que tel n'est pas nécessairement le cas pour l'ensemble des combustibles nucléaires à base d'uranium et de plutonium, en particulier pour les combustibles à base d'oxydes mixtes d'uranium et de plutonium, dits "combustibles MOX".

En effet, certains de ces combustibles MOX, qu'ils aient été irradiés ou pas, peuvent contenir des quantités plus ou moins importantes d'hétérogénéités chimiques, qui se présentent sous la forme d'îlots et qui se caractérisent par une teneur en plutonium supérieure à celle qui est présente dans le reste du combustible. En particulier, lorsque, dans un îlot, la teneur en plutonium atteint environ 35 % de la teneur totale en uranium et en plutonium, la fraction de plutonium insoluble dans l'acide nitrique se met à augmenter pour atteindre 100 % lorsque la teneur en plutonium, par rapport à la teneur totale en uranium et en plutonium, est de l'ordre de 60 % et de 70 % dans l'acide nitrique à 5 M et 10 M, respectivement.

Pour tenter de remédier à cette difficulté de dissolution que l'on rencontre avec les combustibles MOX comprenant ces teneurs locales en plutonium élevées, il a été proposé de mettre sous agitation le mélange formé par les tronçons de combustible nucléaire et la solution d'acide nitrique. Toutefois, la mise en œuvre d'une agitation mécanique au sein d'un dissolveur rotatif est difficilement envisageable.

Aussi, et dans le cas où le procédé de dissolution est réalisé au moyen d'un dissolveur rotatif, il a été proposé de procéder à un renouvellement continu de la solution d'acide nitrique, les godets étant percés pour permettre la circulation de cette solution. Toutefois, une telle proposition n'est pas sans incidence sur les volumes de solution d'acide nitrique à mettre en œuvre.

Par ailleurs, dans les procédés de dissolution actuels, les fines de dissolution présentes dans la solution nitrique de dissolution peuvent être soumises à une opération de séparation solide/liquide, par exemple par centrifugation, puis être traitées en les intégrant au flux de matières à vitrifier dans le procédé de vitrification.

Or, ces fines de dissolution étant associées à, ou intégrant dans leurs grains, des composés valorisables tels que du plutonium, de l'uranium et/ou des produits de fission solubles, il est souhaitable de trouver un moyen de récupérer ces composés valorisables, en optimisant leur dissolution dans la solution d'acide nitrique, en vue de leur recyclage pour la fabrication de nouveaux combustibles. Dans la suite de la présente description, ces composés valorisables associés aux fines de dissolution ou intégrés dans les grains de ces fines de dissolution sont désignés comme étant "contenus" dans ces fines de dissolution.

Le but de l'invention est donc de remédier aux différents inconvénients qui viennent d'être mentionnés et qui sont présentés par les procédés de dissolution actuellement utilisés pour le traitement d'un combustible nucléaire, irradié ou non, et, par conséquent, de proposer un procédé permettant une amélioration de la dissolution de ce combustible, en particulier une amélioration de la dissolution des combustibles MOX comprenant des teneurs locales en plutonium élevées.

Le but de l'invention vise également à fournir un procédé de dissolution d'un combustible nucléaire irradié permettant d'optimiser la dissolution des composés valorisables contenus dans les fines de dissolution issues des procédés de dissolution actuels en vue du recyclage des dits composés.

Le but de l'invention vise également à fournir un procédé de dissolution pouvant fonctionner aussi bien en continu qu'en discontinu et permettant une dissolution améliorée de tout type de combustible nucléaire irradié dont le traitement est envisagé, avec des volumes de solution d'acide nitrique raisonnables et dans des conditions de sûreté optimales.

En particulier, ce procédé de dissolution doit pouvoir être mis en œuvre indépendamment de la composition du combustible nucléaire irradié, qu'il s'agisse d'un combustible irradié qui était à l'origine un combustible neuf du type UOX ou bien encore du type MOX et ce, quelle que soit la teneur en plutonium, par rapport à la teneur totale en uranium et en plutonium, des éventuels îlots présents dans ce combustible MOX.

Par ailleurs, la fabrication de combustible nucléaire neuf à base de plutonium peut entraîner la génération de rebuts de fabrication. De tels rebuts de fabrication peuvent notamment être formés par des poudres d'oxyde de plutonium contenant, le cas échéant, de l'américium, par des poudres d'oxyde mixte d'uranium et de plutonium (U,Pu)O₂ et/ou par des pastilles de combustible mixte du type MOX, ces poudres et/ou pastilles étant jugées non conformes au regard des spécifications, celles-ci pouvant également être confinées dans des gaines, également appelées "crayons". Il est connu que ces matières, non irradiées, ont un comportement à la dissolution par l'acide nitrique plus réfractaire que ces mêmes matières présentes dans un combustible irradié.

De manière plus générale, ce procédé doit donc également permettre la dissolution de ces rebuts de fabrication et des matières entrant dans la composition de combustible neuf (non irradié), telles que les poudres d'oxyde de plutonium ou d'oxyde mixte d'uranium et de plutonium, les pastilles de combustible MOX, ou encore les crayons de combustible MOX neuf, en vue du recyclage des matières recyclables que ces divers rebuts de fabrication contiennent.

### EXPOSÉ DE L'INVENTION

Ces buts, ainsi que d'autres, sont atteints, en premier lieu, par un procédé de dissolution d'un combustible nucléaire, qu'il soit irradié ou neuf, comprenant l'immersion du combustible nucléaire dans une solution d'acide nitrique.

Selon l'invention, ce procédé de dissolution comprend, en outre, un broyage mécanique du combustible nucléaire, ce broyage mécanique étant mis en œuvre dans la solution d'acide nitrique pendant ladite immersion.

Le procédé selon l'invention consiste donc à réaliser, de manière concomitante, l'immersion et le broyage mécanique du combustible nucléaire, pour optimiser la dissolution des matières formant ce combustible dans une solution d'acide nitrique et ainsi obtenir une solution nitrique de dissolution dont la phase liquide comprend non seulement les composés qui sont dissous au moins partiellement par les procédés de dissolution actuels et, notamment, le plutonium, le cas échéant l'uranium, les actinides mineurs et les produits de fission solubles, mais également les composés valorisables contenus dans les fines de dissolution mais que les procédés de dissolution actuels ne permettent pas de solubiliser, comme le plutonium, l'uranium et/ou des produits de fission solubles.

La mise en œuvre d'un tel broyage mécanique pendant l'immersion du combustible nucléaire permet de diminuer graduellement la taille des particules, ou grains, du combustible nucléaire à dissoudre et donc d'en augmenter graduellement la surface spécifique. Ce faisant, le broyage mécanique associé à l'immersion permet d'accroître, à la surface des particules du combustible nucléaire, le nombre de sites réactionnels au niveau desquels se produit la réaction de dissolution mais également le nombre de défauts structuraux et/ou cristallographiques qui correspondent à des sites potentiels de corrosion, et donc de dissolution, desdites particules du combustible nucléaire dans la solution d'acide nitrique.

L'ensemble des phénomènes décrits ci-dessus permet de considérer que le procédé de dissolution selon l'invention est un procédé qui permet d'obtenir une activation continue de la surface des particules du combustible nucléaire, favorisant leur dissolution dans la solution d'acide nitrique.

La mise en œuvre d'un broyage mécanique pendant l'immersion du combustible nucléaire assure également un renouvellement, par agitation, de la solution d'acide nitrique au niveau de l'interface solide/liquide (particules de combustible nucléaire/solution d'acide nitrique), sans qu'il soit nécessaire de recourir à des volumes excessifs de solution d'acide nitrique et/ou à un système supplémentaire d'agitation en tant que tel. Le procédé de dissolution selon l'invention est donc de mise en œuvre tout à fait envisageable pour un fonctionnement en continu ou en discontinu.

Ce constat est d'autant plus inattendu et surprenant que les performances de dissolution qui sont atteintes avec le procédé selon l'invention sont bien supérieures à celles obtenues avec un procédé de dissolution de combustible nucléaire qui mettrait en œuvre un broyage préalable à l'immersion et dans lequel la surface spécifique du combustible nucléaire serait indiscutablement supérieure et ce, dès le démarrage de l'immersion.

De surcroît, par la mise en œuvre d'un broyage mécanique dans la solution d'acide nitrique, le procédé selon l'invention présente comme autre avantage majeur de limiter la dissémination des particules broyées de combustible nucléaire, et donc la contamination qui pourrait en résulter, par rapport à un procédé de dissolution dans lequel ce broyage mécanique serait effectué "à sec", en préalable à l'immersion du combustible dans la solution d'acide nitrique, compte tenu de la nature nucléaire du combustible à dissoudre.

Dans une variante avantageuse du procédé selon l'invention, la solution d'acide nitrique dans laquelle le combustible nucléaire est simultanément immergé et broyé est chauffée entre 90 °C et 105 °C.

Le fait de chauffer ainsi la solution d'acide nitrique permet d'augmenter la cinétique de dissolution du combustible nucléaire et, ainsi, d'améliorer encore les performances de dissolution du procédé selon l'invention.

Dans une variante du procédé selon l'invention, la concentration molaire de la solution d'acide nitrique peut être comprise entre 1 mol/L et 10 mol/L.

La concentration molaire de la solution d'acide nitrique peut, en particulier, être adaptée à la composition de la matière formant le combustible nucléaire à dissoudre.

La concentration molaire de la solution d'acide nitrique est avantageusement comprise entre 3 mol/L et 8 mol/L.

Dans une autre variante avantageuse du procédé selon l'invention, la solution d'acide nitrique peut, en outre, comprendre un poison neutronique.

La présence d'un poison neutronique dans le mélange formé par le combustible nucléaire et la solution d'acide nitrique permet d'optimiser la condition d'un état neutronique dit sous-critique de ce mélange.

À titre d'exemple de poison neutronique, on peut citer le gadolinium.

Dans une autre variante du procédé selon l'invention, l'immersion du combustible nucléaire dans la solution d'acide nitrique peut être maintenue pendant une durée d'au moins 30 min.

La durée d'immersion du combustible nucléaire dans la solution d'acide nitrique peut, en particulier, être adaptée à la composition de ce combustible nucléaire à dissoudre.

Grâce au procédé de l'invention, un suivi en ligne de la dissolution peut être assuré, ce qui permet de piloter l'arrêt de la dissolution, et donc la vidange du réacteur de dissolution, en fonction de l'état d'avancement des réactions de dissolution considérées.

Comme indiqué ci-dessus, à la différence des procédés de dissolution de l'art antérieur, le procédé selon l'invention comprend un broyage mécanique du combustible nucléaire qui est mis en œuvre dans la solution d'acide nitrique pendant l'immersion dudit combustible nucléaire.

Ce broyage mécanique peut, bien entendu, être mis en œuvre pendant une partie de la durée de l'immersion du combustible nucléaire.

Toutefois, dans une variante particulièrement préférée du procédé selon l'invention, le broyage mécanique est mis en œuvre pendant toute la durée de cette immersion, de manière à optimiser encore la dissolution du combustible nucléaire dans la solution d'acide nitrique.

Dans le cas où le combustible nucléaire est confiné dans une gaine, le procédé de dissolution selon l'invention peut avantageusement comprendre, en outre, une étape de dégainage du combustible nucléaire, cette étape de dégainage étant préalable à l'immersion.

Une telle étape de dégainage permet de favoriser le contact entre la solution d'acide nitrique et la matière constitutive du combustible nucléaire, que cette matière se présente sous forme de poudre ou de pastille.

Cette étape de dégainage est classiquement assurée par un dégainage mécanique.

Une telle étape de dégainage mécanique peut, par exemple, être réalisée par cisaillage ou au moyen de la technique proposée dans le document EP 2 345 041 permettant de vider les gaines par déformation (par "ovalisation") de ladite gaine.

Bien entendu, si la matière constitutive du combustible nucléaire est une poudre non irradiée à base d'oxyde de plutonium, le cas échéant contenant également de l'uranium ou de l'américium, ou bien encore une pastille non irradiée (et rebutée lors de la fabrication) à base d'oxyde de plutonium ou d'oxyde mixte d'uranium et de plutonium, le procédé de dissolution selon l'invention ne nécessite pas une telle étape de dégainage préalable, poudres et pastilles non irradiées étant directement broyables.

Le combustible nucléaire à dissoudre, qu'il soit irradié ou non irradié, peut comprendre au moins un oxyde de plutonium et/ou au moins un oxyde mixte de plutonium et d'au moins un deuxième métal autre que le plutonium. Comme on le verra ci-après, ce deuxième métal peut plus particulièrement être choisi parmi l'uranium, le thorium, le neptunium, l'américium et le curium.

Lorsque le combustible nucléaire à dissoudre est un combustible irradié, ce combustible peut bien entendu être à l'origine un combustible neuf comprenant au moins un oxyde d'uranium, tel qu'un combustible de dioxyde d'uranium UO₂, également appelé combustible UOX. Dans le cas où il comprend au moins un oxyde mixte de plutonium et d'au moins un deuxième métal, ce combustible nucléaire, irradié ou non, peut être un combustible d'un oxyde mixte de plutonium et d'au moins un élément choisi parmi l'uranium, le thorium et un actinide mineur.

Par "actinide mineur", on entend un élément chimique de la famille des actinides, à l'exception de l'uranium, du plutonium et du thorium. De tels actinides mineurs sont formés, dans les réacteurs, par captures successives de neutrons par les noyaux d'uranium du combustible nucléaire. Les principaux actinides mineurs sont le neptunium, l'américium et le curium.

Le combustible nucléaire comprenant au moins un oxyde mixte de plutonium et d'au moins un deuxième métal peut plus particulièrement être un combustible d'oxyde mixte d'uranium et de plutonium (U,Pu)O₂, également appelé combustible MOX.

Grâce à ses performances de dissolution améliorées par rapport aux procédés de dissolution actuels, le procédé selon l'invention permet, en particulier, de dissoudre des combustibles MOX présentant des hétérogénéités chimiques locales dont les teneurs en plutonium sont élevées, typiquement supérieures ou égales à 35 % de la teneur totale en uranium et en plutonium.

Le combustible comprenant au moins un oxyde mixte de plutonium et d'au moins un deuxième métal peut encore être un combustible d'oxyde mixte de plutonium et d'un ou de plusieurs actinides mineurs, ce ou ces actinides mineurs étant plus particulièrement choisis parmi le neptunium, l'américium et le curium.

Bien que le procédé selon l'invention s'attache essentiellement à la dissolution de combustible nucléaire constitué par un combustible nucléaire irradié, il peut également être avantageusement appliqué à la dissolution de combustible nucléaire neuf, non irradié, dont la dissolution dans une solution d'acide nitrique est connue comme étant plus difficile que celle du même combustible irradié.

En particulier, ce combustible nucléaire peut comprendre, voire être constitué par, des rebuts de fabrication de combustible nucléaire non irradié ou neuf.

Ainsi, le combustible nucléaire qui peut être dissous par le procédé selon l'invention peut être un combustible irradié et/ou un combustible non irradié.

L'invention se rapporte, en deuxième lieu, à l'utilisation d'un dispositif particulier pour la mise en œuvre du procédé de dissolution d'un combustible nucléaire tel que défini ci-dessus, les caractéristiques avantageuses de ce procédé de dissolution pouvant être prises seules ou en combinaison.

Selon l'invention, ce dispositif est un broyeur muni de moyens de broyage mécanique.

De manière tout à fait conventionnelle, un tel broyeur est doté d'une chambre de broyage équipée des moyens de broyage mécanique et dans laquelle sont introduits le combustible nucléaire, la solution d'acide nitrique et, le cas échéant, le poison neutronique.

L'avantage de l'utilisation d'un tel broyeur réside notamment dans le fait que celui-ci peut être connecté, de manière aisée et sûre, à des moyens d'introduction du combustible nucléaire et de la solution d'acide nitrique, pour le chargement de ceux-ci dans la chambre de broyage, à des moyens d'évacuation de la solution nitrique de dissolution, des produits solides insolubles et des gaz, ainsi qu'à l'un ou plusieurs des autres moyens suivants :
- des moyens de filtration de la solution nitrique de dissolution,
- des moyens de chauffage,
- des moyens de recirculation de la solution nitrique de dissolution,
- des moyens de prélèvement d'échantillons, et
- des moyens de réglages des paramètres de la réaction de dissolution tels que la température et le pH.

À titre d'exemples, les moyens de chauffage peuvent être adaptés de manière à chauffer directement le mélange formé par le combustible nucléaire et la solution d'acide nitrique, ou encore être associés à des moyens de circulation dudit mélange, tels qu'un vase d'expansion.

De la même manière, le réglage du pH peut se faire par l'ajout d'une solution adaptée, soit directement dans la chambre de broyage, soit par l'intermédiaire d'un vase d'expansion dans lequel circule le mélange formé par le combustible nucléaire et la solution d'acide nitrique.

La connexion du broyeur à des moyens de prélèvement peut notamment permettre de suivre l'état d'avancement de la dissolution. De tels moyens de prélèvement peuvent être disposés, en série ou en parallèle, pour mesurer le pH de la solution nitrique de dissolution et/ou la concentration d'ions dans cette solution (par exemple, par colorimétrie/spectrométrie UV/visible, par dosage), ou encore pour déterminer la distribution de la taille de particules du combustible nucléaire à dissoudre (par exemple, par granulométrie). De tels moyens de prélèvement peuvent notamment être constitués par des cellules milli-fluidiques.

Le broyeur utilisé pour la mise en œuvre du procédé de dissolution selon l'invention est avantageusement un broyeur à bille(s) ou à galet(s). Les matériaux du broyeur ainsi que des billes ou galets sont bien entendu adaptés pour être résistants à la nature nucléaire du combustible à dissoudre ainsi qu'à la corrosion qui pourrait être engendrée par la solution d'acide nitrique.

Ainsi, et dans une version avantageuse de l'invention, la ou les billes et autre(s) galet(s) sont en dioxyde de zirconium, également dénommé zircone, qui optimise la résistance à la corrosion engendrée par le mélange formé par le combustible nucléaire et la solution d'acide nitrique.

L'invention se rapporte, en troisième lieu, à un procédé de dissolution d'un combustible nucléaire irradié permettant la dissolution améliorée de composés valorisables contenus dans des fines de dissolution issues des procédés de dissolution actuels.

Selon l'invention, ce procédé comprend les étapes successives suivantes, prises dans cet ordre :
(a) une dissolution par immersion du combustible nucléaire irradié dans une solution d'acide nitrique, moyennant quoi on obtient une solution nitrique de dissolution comprenant des fines de dissolution,
(b) une séparation des fines de dissolution de la solution nitrique de dissolution, et
(c) une dissolution des fines de dissolution séparées à l'étape (b) par la mise en œuvre du procédé de dissolution décrit précédemment, les caractéristiques avantageuses de ce procédé pouvant être prises seules ou en combinaison.

En d'autres termes, le procédé de dissolution d'un combustible nucléaire irradié comprend les étapes successives suivantes, prises dans cet ordre :
(a) une dissolution par immersion du combustible nucléaire irradié dans une solution d'acide nitrique, moyennant quoi on obtient une solution nitrique de dissolution comprenant des fines de dissolution,
(b) une séparation des fines de dissolution de la solution nitrique de dissolution, et
(c) une dissolution des fines de dissolution séparées à l'étape (b) comprenant une immersion et un broyage mécanique de ces fines de dissolution dans une solution d'acide nitrique, ce broyage mécanique étant mis en œuvre dans la solution d'acide nitrique pendant ladite immersion.

Les étapes (a) et (b) du procédé ci-dessus correspondent aux étapes des procédés de dissolution actuels, ces étapes ayant été décrites ci-avant dans le chapitre intitulé "État de la technique antérieure". Comme indiqué dans ce chapitre, la mise en œuvre de ces étapes (a) puis (b) ne permettent pas de dissoudre, de manière satisfaisante, les composés valorisables contenus dans les fines de dissolution, en particulier le plutonium, l'uranium et/ou des produits de fission solubles.

Or, la mise en œuvre de l'étape (c) après l'étape (b) permet d'optimiser cette dissolution des composés valorisables contenus dans les fines de dissolution issues des procédés de dissolution actuels en vue de leur recyclage. Ce faisant, le flux de matières solides qui peuvent être vitrifiées se trouve *de facto* être appauvri en plutonium, uranium et/ou produits de fission solubles

Dans une variante du procédé selon l'invention, lorsque le combustible nucléaire irradié est confiné dans une gaine, une étape de dégainage du combustible nucléaire irradié peut être réalisée, cette étape de dégainage étant préalable à l'étape (a).

Le combustible nucléaire irradié à dissoudre peut comprendre au moins un oxyde de plutonium et/ou au moins un oxyde mixte de plutonium et d'au moins un deuxième métal autre que le plutonium. Ce deuxième métal peut plus particulièrement être choisi parmi l'uranium, le thorium, le neptunium, l'américium et le curium.

Le combustible nucléaire irradié comprenant au moins un oxyde mixte de plutonium et d'au moins un deuxième métal peut plus particulièrement être un combustible MOX.

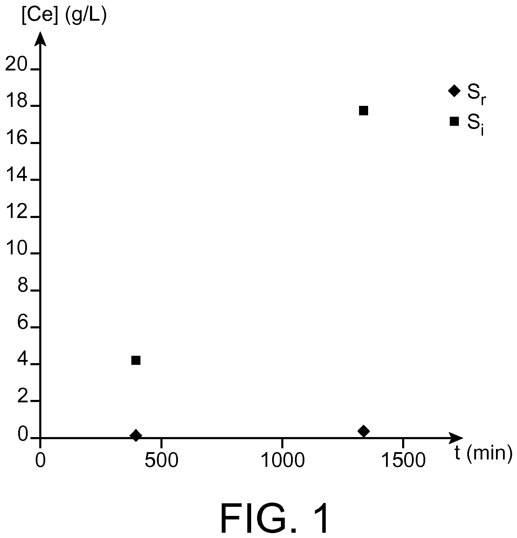

D'autres caractéristiques et avantages de l'invention apparaîtront à la lecture du complément de description qui suit, qui est fait en référence à la figure 1 annexée, et qui se rapporte à des exemples de mise en œuvre de procédés de dissolution, deux procédés conformes à l'invention comprenant une immersion et un broyage simultanés (Pᵢ et Pₗ) et deux autres procédés de référence, l'un ne comprenant qu'une immersion (Pᵣ) et l'autre comprenant un broyage suivi d'une immersion (P_{R}).

Il est précisé que les exemples décrits ci-après ont été réalisés avec du dioxyde de cérium CeO₂, parfois dénommé cérine, qui est un oxyde métallique non radioactif simulant le plutonium, en termes de dissolution dans une solution d'acide nitrique.

Bien entendu, ces exemples ne sont donnés qu'à titre d'illustration de l'objet de l'invention et ne constituent en aucun cas une limitation de cet objet.

### BRÈVE DESCRIPTION DES DESSINS

La figure 1 représente un graphique traduisant l'évolution, en fonction du temps (noté t et exprimé en min), de la concentration massique en cérium (notée [Ce] et exprimée en g/L), dans des solutions nitriques de dissolution obtenues par la mise en œuvre de deux procédés de dissolution, l'un conforme à l'invention (Pᵢ), l'autre de référence et conforme à l'état de la technique (Pᵣ).

### EXPOSÉ DÉTAILLÉ DE MODES DE RÉALISATION PARTICULIERS

### EXEMPLE 1: Comparaison de deux procédés de dissolution de cérine dans une solution d'acide nitrique (5 M)

Dans cet exemple, on a utilisé un broyeur à billes disponible auprès de la société Wma-Getzmann sous la dénomination commerciale Dispermat® SL5 présentant un volume de chambre de broyage de 50 mL et des billes en dioxyde de zirconium.

On a connecté une vanne trois voies au tuyau de sortie de ce broyeur afin de pouvoir effectuer des prélèvements, de manière à déterminer l'état d'avancement de la dissolution de la cérine dans la solution d'acide nitrique par le suivi de la concentration de cérium [Ce] dans la solution nitrique de dissolution résultante, cette concentration étant déterminée par spectrométrie d'émission atomique à plasma, par couplage inductif (ICP-AES).

Dans un premier essai, on a immergé 20 g de cérine dans 100 mL d'une solution d'acide nitrique à une concentration molaire de 5 mol/L (5 M) dans la chambre de broyage du broyeur à billes, en présence des billes, de manière à suivre l'évolution de la dissolution de la cérine par la mise en œuvre d'un procédé de dissolution de référence, noté Pᵢ.

Dans un deuxième essai, on a immergé 20 g de cérine dans 100 mL d'une solution d'acide nitrique à une concentration molaire de 5 mol/L (ou 5 M) dans la chambre de broyage du broyeur à billes, mais en l'absence des dites billes, de manière à suivre l'évolution de la dissolution de la cérine par la mise en œuvre d'un procédé de dissolution de référence, noté Pᵣ.

En se reportant à la figure 1 traduisant l'évolution, en fonction du temps, de la concentration massique en cérium dans chacune des solutions nitriques de dissolution obtenues par la mise en œuvre des procédés de dissolution Pᵢ et Pᵣ, on observe :
- qu'après 400 min (soit un peu plus de 6 h), la concentration massique en cérium dans la solution nitrique de dissolution est de 0,09 g/L avec le procédé Pᵣ contre 4,22 g/L avec le procédé Pᵢ, ce qui correspond à une dissolution de 0,1 % de cérine avec le procédé Pᵣ contre 5 % avec le procédé Pᵢ, et
- qu'après 1350 min (environ 22 h), la concentration massique en cérium dans la solution nitrique de dissolution est de 0,31 g/L avec le procédé Pᵣ contre 17,75 g/L avec le procédé Pᵢ, ce qui correspond à une dissolution de seulement 0,2 % de cérine avec le procédé Pᵣ contre 11 % avec le procédé Pᵢ.

En d'autres termes, on observe une augmentation d'un facteur de 50 de la cinétique de dissolution de la cérine dans la solution d'acide nitrique à 5 M, justifiant l'intérêt de mettre en œuvre simultanément l'immersion et le broyage de la cérine.

### EXEMPLE 2 : Comparaison de deux procédés de dissolution de cérine dans une solution d'acide nitrique (5 M)

Dans cet exemple, on a utilisé un broyeur oscillant comportant deux compartiments, notés C_{I} et C_{R}.

Dans le compartiment C_{I} comprenant une bille de broyage en dioxyde de zirconium, on a mis en œuvre un procédé de dissolution conforme à l'invention, noté P_{I}. Pour ce faire, on a immergé 2 g de cérine dans 10 mL d'une solution d'acide nitrique à une concentration molaire de 5 M. Après 7,5 h d'immersion et de broyage simultanés de la cérine dans la solution d'acide nitrique, la solution nitrique de dissolution obtenue, notée S_{I}, a été analysée par ICP-AES.

Dans le compartiment C_{R} comprenant une bille de broyage en dioxyde de zirconium, on a mis en œuvre un procédé de dissolution de référence, noté P_{R}. Pour ce faire, on a immergé 2 g de cérine dans 10 mL d'eau déionisée. Après 7,5 h d'immersion et de broyage simultanés de la cérine dans l'eau déionisée, la solution comprenant la cérine broyée a été filtrée puis séchée. La cérine broyée et séchée a alors été introduite dans un bêcher et immergée dans 10 mL d'une solution d'acide nitrique à une concentration molaire de 5 M et ce, sous agitation au moyen d'un barreau magnétique. Après 7,5 h d'immersion et d'agitation de la cérine broyée dans la solution d'acide nitrique, la solution nitrique de dissolution obtenue, notée S_{R}, a également été analysée par ICP-AES.

Les concentrations massiques de cérium mesurées dans les solutions S_{I} et S_{R} sont respectivement de 4 g/L et de 0,75 g/L.

On observe donc, dans cet exemple, une augmentation d'un facteur de 5 de la cinétique de dissolution de la cérine dans la solution d'acide nitrique à 5 M.

De tels résultats mettent donc clairement en évidence la synergie du procédé de dissolution conforme à l'invention qui met en œuvre une immersion et un broyage simultanés, par rapport à un procédé de dissolution mettant en œuvre un broyage suivi d'une immersion.

### BIBLIOGRAPHIE

EP 2 345 041 A1

## Revendications

1. Procédé de dissolution d'un combustible nucléaire comprenant l'immersion du combustible nucléaire dans une solution d'acide nitrique, **caractérisé en ce qu'**il comprend, en outre, un broyage mécanique du combustible nucléaire, ce broyage mécanique étant mis en œuvre dans la solution d'acide nitrique pendant ladite immersion.

2. Procédé de dissolution selon la revendication 1, dans lequel la solution d'acide nitrique est chauffée entre 90 °C et 105 °C.

3. Procédé de dissolution selon la revendication 1 ou 2, dans lequel la concentration molaire de la solution d'acide nitrique est comprise entre 1 mol/L et 10 mol/L et, avantageusement, entre 3 mol/L et 8 mol/L.

4. Procédé de dissolution selon l'une quelconque des revendications 1 à 3, dans lequel la solution d'acide nitrique comprend, en outre, un poison neutronique, tel que du gadolinium.

5. Procédé de dissolution selon l'une quelconque des revendications 1 à 4, dans lequel le broyage mécanique est mis en œuvre pendant toute la durée de l'immersion.

6. Procédé de dissolution selon l'une quelconque des revendications 1 à 5, dans lequel le combustible nucléaire comprend au moins un oxyde de plutonium et/ou au moins un oxyde mixte de plutonium et d'au moins un deuxième métal choisi parmi l'uranium, le thorium, le neptunium, l'américium et le curium.

7. Procédé de dissolution selon la revendication 6, dans lequel, le deuxième métal étant l'uranium, le combustible nucléaire comprenant au moins un oxyde mixte d'uranium et de plutonium, est un combustible MOX.

8. Procédé de dissolution selon l'une quelconque des revendications 1 à 7, dans lequel le combustible nucléaire est un combustible nucléaire irradié.

9. Procédé de dissolution selon l'une quelconque des revendications 1 à 7, dans lequel le combustible nucléaire comprend des rebuts de fabrication de combustible nucléaire non irradié.

10. Procédé de dissolution selon l'une quelconque des revendications 1 à 9, comprenant, en outre, lorsque le combustible nucléaire est confiné dans une gaine, une étape de dégainage du combustible nucléaire, cette étape de dégainage étant préalable à l'immersion.

11. Utilisation d'un broyeur muni de moyens de broyage mécanique pour la mise en œuvre du procédé de dissolution d'un combustible nucléaire selon l'une quelconque des revendications 1 à 10.

12. Utilisation selon la revendication 11, dans lequel le broyeur est un broyeur à billes ou à galets, les billes ou galets étant, de préférence, en dioxyde de zirconium.

13. Procédé de dissolution d'un combustible nucléaire irradié comprenant les étapes successives suivantes, prises dans cet ordre :
(a) une dissolution par immersion du combustible nucléaire irradié dans une solution d'acide nitrique, moyennant quoi on obtient une solution nitrique de dissolution comprenant des fines de dissolution,
(b) une séparation des fines de dissolution de la solution nitrique de dissolution, et
(c) une dissolution des fines de dissolution séparées à l'étape (b) par la mise en œuvre du procédé de dissolution selon l'une quelconque des revendications 1 à 5.

14. Procédé selon la revendication 13, comprenant, en outre, lorsque le combustible nucléaire irradié est confiné dans une gaine, une étape de dégainage du combustible nucléaire irradié, cette étape de dégainage étant préalable à l'étape (a).

15. Procédé de dissolution selon la revendication 13 ou 14, dans lequel le combustible nucléaire irradié comprend au moins un oxyde de plutonium et/ou au moins un oxyde mixte de plutonium et d'au moins un deuxième métal choisi parmi l'uranium, le thorium, le neptunium, l'américium et le curium.

16. Procédé de dissolution selon la revendication 15, dans lequel, le deuxième métal étant l'uranium, le combustible nucléaire comprenant au moins un oxyde mixte d'uranium et de plutonium, est un combustible MOX.

## Patentansprüche

1. Verfahren zum Auflösen von Kernbrennstoff, das das Eintauchen des Kernbrennstoffs in eine Salpetersäurelösung umfasst,
**dadurch gekennzeichnet, dass**
es ferner das mechanische Zerkleinern des Kernbrennstoffs umfasst, wobei das mechanische Zerkleinern in der Salpetersäurelösung während des Eintauchens durchgeführt wird.

2. Auflösungsverfahren nach Anspruch 1,
wobei die Salpetersäurelösung auf eine Temperatur zwischen 90°C und 105°C erhitzt wird.

3. Auflösungsverfahren nach Anspruch 1 oder 2,
wobei die molare Konzentration der Salpetersäurelösung zwischen 1 mol/L und 10 mol/L und vorteilhafterweise zwischen 3 mol/L und 8 mol/L liegt.

4. Auflösungsverfahren nach einem der Ansprüche 1 bis 3,
wobei die Salpetersäurelösung ferner ein Neutronengift, wie etwa Gadolinium, enthält.

5. Auflösungsverfahren nach einem der Ansprüche 1 bis 4,
wobei das mechanische Zerkleinern während der gesamten Eintauchdauer erfolgt.

6. Auflösungsverfahren nach einem der Ansprüche 1 bis 5,
wobei der Kernbrennstoff mindestens ein Plutoniumoxid und/oder mindestens ein Mischoxid aus Plutonium und aus mindestens einem zweiten Metall, ausgewählt aus Uran, Thorium, Neptunium, Americium und Curium, enthält.

7. Auflösungsverfahren nach Anspruch 6,
wobei das zweite Metall Uran ist und der Kernbrennstoff, der zumindest ein Mischoxid aus Uran und Plutonium enthält, ein MOX-Brennstoff ist.

8. Auflösungsverfahren nach einem der Ansprüche 1 bis 7,
wobei der Kernbrennstoff ein bestrahlter Kernbrennstoff ist.

9. Auflösungsverfahren nach einem der Ansprüche 1 bis 7,
wobei der Kernbrennstoff Rückstände aus der Herstellung von unbestrahltem Kernbrennstoff enthält.

10. Auflösungsverfahren nach einem der Ansprüche 1 bis 9,
ferner umfassend bei in einer Hülle eingeschlossenem Kernbrennstoff einen Schritt des Enthüllens des Kernbrennstoffs, wobei dieser Schritt des Enthüllens vor dem Eintauchen erfolgt.

11. Verwendung eines Zerkleinerers mit mechanischen Zerkleinerungseinrichtungen zum Durchführen des Verfahrens zum Auflösen eines Kernbrennstoffs nach einem der Ansprüche 1 bis 10.

12. Verwendung nach Anspruch 11, wobei der Zerkleinerer eine Kugel- oder Rollenmühle ist, wobei die Kugeln oder Rollen aus Zirkoniumdioxid bestehen.

13. Verfahren zum Auflösen eines bestrahlten Kernbrennstoffs, umfassend die nachstehenden, aufeinanderfolgenden Schritte in dieser Reihenfolge:
(a) Auflösen durch Eintauchen von bestrahltem Kernbrennstoff in eine Salpetersäurelösung, wodurch eine Auflösungssalpeterlösung mit Auflösungsfeinstoffen erhalten wird,
(b) Abtrennen der Auflösungsfeinstoffe aus der Auflöungssalpeterlösung, und
(c) Auflösen der in Schritt (b) abgetrennten Auflösungsfeinstoffe durch Durchführen des Auflösungsverfahrens nach einem der Ansprüche 1 bis 5.

14. Verfahren nach Anspruch 13, ferner umfassend dann, wenn der bestrahlte Kernbrennstoff in einer Hülle eingeschlossen ist, einen Schritt des Enthüllens des bestrahlten Kernbrennstoffs, wobei dieser Schritt des Enthüllens vor dem Schritt (a) erfolgt.

15. Auflösungsverfahren nach Anspruch 13 oder 14, wobei der bestrahlte Kernbrennstoff zumindest ein Plutoniumoxid und/oder zumindest ein Mischoxid aus Plutonium und aus zumindest einem zweiten Metall, ausgewählt aus Uran, Thorium, Neptunium, Americium und Curium, enthält.

16. Auflösungsverfahren nach Anspruch 15, wobei das zweite Metall Uran ist und der Kernbrennstoff, der zumindest ein Mischoxid aus Uran und Plutonium enthält, ein MOX-Brennstoff ist.

## Claims

1. Process for dissolving nuclear fuel, comprising immersion of the nuclear fuel in a nitric acid solution, **characterized in that** it further comprises mechanical milling of the nuclear fuel, this mechanical milling being performed in the nitric acid solution during said immersion.

2. The dissolution process according to claim 1, wherein the nitric acid solution is heated to between 90 °C and 105 °C.

3. The dissolution process according to claim 1 or 2, wherein the molar concentration of the nitric acid solution is between 1 mol/L and 10 mol/L, and advantageously between 3 mol/L and 8 mol/L.

4. The dissolution process according to any of claims 1 to 3, wherein the nitric acid solution also comprises a neutron poison such as gadolinium.

5. The dissolution process according to any of claims 1 to 4, wherein mechanical milling is performed throughout the entire duration of immersion.

6. The dissolution process according to any of claims 1 to 5, wherein the nuclear fuel comprises at least one plutonium oxide and/or at least one mixed oxide of plutonium and of at least one second metal selected from among uranium, thorium, neptunium, americium and curium.

7. The dissolution process according to claim 6, wherein, the second metal being uranium, the nuclear fuel containing at least one uranium and plutonium mixed oxide is a MOX fuel.

8. The dissolution process according to any of claims 1 to 7, wherein the nuclear fuel is irradiated nuclear fuel.

9. The dissolution process according to any of claims 1 to 7, wherein the nuclear fuel comprises fabrication rejects of non-irradiated nuclear fuel.

10. The dissolution process according to any of claims 1 to 9 further comprising, when the nuclear fuel is confined within a cladding, a step to de-clad the nuclear fuel, this decladding step being prior to immersion.

11. Use of a mill equipped with mechanical milling means to implement the process for dissolving nuclear fuel according to any of claims 1 to 10.

12. The use according to claim 11, wherein the mill is a bead or pebble mill, the beads or pebbles preferably being in zirconium dioxide.

13. Process for dissolving irradiated nuclear fuel comprising the following successive steps, taken in this order:
(a) dissolving irradiated nuclear fuel by immersion in nitric acid solution, after which a nitric dissolution solution is obtained containing dissolution fines;
(b) separating the dissolution fines from the nitric dissolution solution; and
(c) dissolving the dissolution fines separated at step (b) by implementing the dissolution process according to any of claims 1 to 5.

14. The process according to claim 13 further comprising, when the irradiated nuclear fuel is confined within a cladding, a step to de-clad the irradiated nuclear fuel, this decladding step preceding step (a).

15. The dissolution process according to claim 13 or 14, wherein the irradiated nuclear fuel comprises at least one plutonium oxide and/or at least one mixed oxide of plutonium and of at least one second metal selected from among uranium, thorium, neptunium, americium and curium.

16. The dissolution process according to claim 15, wherein, the second metal being uranium, the nuclear fuel comprising at least one uranium and plutonium mixed oxide is MOX fuel.
